# DEMANDE DE BREVET EUROPEEN

(11) **EP 3 042 797 A1**
(43) Date de publication de la demande: **13.07.2016**
(21) Numéro de dépôt: 15198461.4
(22) Date de dépôt: 08.12.2015
(51) Int. Cl.: B60K 13/04, B60K 15/04

(54) **DISPOSITIF D'INVIOLABILITE DE RESERVOIR D'AGENT REDUCTEUR DE VEHICULE AUTOMOBILE**

(30) Priorité: 07.01.2015 FR 1550087
(71) Demandeur: Peugeot Citroën Automobiles SA, 78140 Vélizy-Villacoublay (FR)
(72) Inventeur: CONVERS, Germain, 25200 BETHONCOURT (FR); LE BARS, Franck, 33200 BORDEAUX (FR); HUREAUX, SEBASTIEN, 70200 MAGNY DANIGON (FR); FOSSE, THIERRY, 25200 MONTBELIARD (FR)

(57) **Abrégé**

L'invention concerne un dispositif d'obturation de réservoir d'agent réducteur d'oxydes d'azote de véhicule automobile, le dispositif comprenant une goulotte de réservoir d'agent réducteur (10) et un bouchon (12) de réservoir d'agent réducteur, caractérisé en ce qu'il comporte une extension (16, 17, 18) s'étendant depuis le bouchon (12) laquelle extension (16, 17, 18) comprend des moyens de fixation destinés à coopérer avec un bouchon de réservoir de carburant (22) pour retenir l'extension (16,17,18) à l'encontre d'une ouverture du bouchon de réservoir d'agent réducteur (12).

## Description

L'invention concerne les bouchons de réservoirs de véhicules automobiles et notamment les bouchons de réservoirs d'agent réducteur d'oxyde d'azote.

De plus en plus de véhicules automobiles vont être équipés d'un système de réduction catalytique sélective des oxydes d'azote ou SCR pour Selective Catalytic Reduction en Anglais. De tels véhicules sont équipés d'un réservoir d'agent réducteur d'oxyde d'azote tel que de l'urée, lequel agent réducteur est typiquement décomposé en ammoniac au sein du véhicule. Un tel agent réducteur d'oxyde d'azote est notamment connu sous le nom commercial de Adblue, marque déposée.

Comme pour les bouchons de réservoir de carburant, il existe un besoin d'empêcher l'accès au réservoir à une personne non autorisée. Pour le réservoir de carburant, on connait le principe du bouchon ayant un verrou intégré ou de la trappe équipée d'un verrou commandé lequel se libère simultanément au déverrouillage des portes du véhicule.

Le bouchon de réservoir d'agent réducteur est souvent placé à proximité du bouchon de carburant, et peut ainsi être enfermé par la même trappe que le bouchon de carburant. Il reste néanmoins un besoin pour un verrouillage du bouchon d'agent réducteur en l'absence de trappe commandée. Il existe en outre un besoin pour un bouchon d'agent réducteur qui participe à empêcher une confusion entre les deux bouchons au moment du remplissage.

Le but de l'invention est de répondre à ces besoins.

Ce but est atteint selon l'invention grâce à un dispositif d'obturation de réservoir d'agent réducteur d'oxydes d'azote de véhicule automobile, le dispositif comprenant une goulotte de réservoir d'agent réducteur et un bouchon de réservoir d'agent réducteur, caractérisé en ce qu'il comporte une extension s'étendant depuis le bouchon, laquelle extension comprend des moyens de fixation destinés à coopérer avec un bouchon de réservoir de carburant pour retenir l'extension à l'encontre d'une ouverture du bouchon de réservoir d'agent réducteur.

Avantageusement, le dispositif comporte un lien d'imperdabilité du bouchon de réservoir d'agent réducteur, et l'extension est venue de matière avec le lien d'imperdabilité.

Avantageusement, l'extension s'étend depuis le bouchon de réservoir d'agent réducteur radialement à la goulotte de réservoir d'agent réducteur.

L'invention concerne également un dispositif d'obturation de réservoir d'agent réducteur et d'obturation de réservoir de carburant, le dispositif comprenant un tel dispositif d'obturation de réservoir d'agent réducteur et comprenant en outre une goulotte de réservoir de carburant et un bouchon de réservoir de carburant

Avantageusement, les moyens de fixation de l'extension comportent deux branches configurées pour venir de part et d'autre de la goulotte de réservoir de carburant.

Avantageusement, les moyens de fixation de l'extension sont pincés entre le bouchon du réservoir de carburant et la goulotte du réservoir de carburant pour retenir l'extension à l'encontre d'une ouverture du bouchon de réservoir d'agent réducteur.

Avantageusement, l'extension comporte une pièce métallique s'étendant entre les deux bouchons.

Avantageusement, la pièce métallique est noyée dans un matériau plastique lequel matériau plastique est venu de matière avec un matériau plastique constitutif du lien d'imperdabilité.

Avantageusement, l'extension est rigide de telle sorte que le bouchon du réservoir d'agent réducteur ne peut pas être ouvert sans ouvrir le bouchon du réservoir de carburant de manière à permettre à l'extension de s'écarter de la goulotte du réservoir de carburant.

Avantageusement, l'extension forme un anneau disposé de manière à entourer la goulotte du réservoir de carburant.

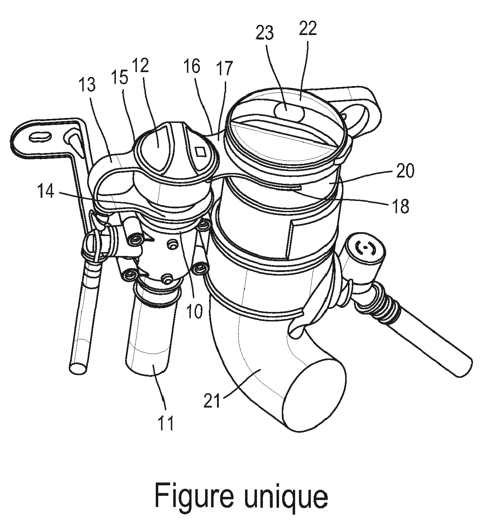

D'autres caractéristiques, buts et avantages de l'invention apparaîtront à la lecture de la description détaillée qui va suivre, faite en référence à la figure annexée qui représente un bouchon de réservoir d'agent réducteur selon un mode de réalisation de l'invention.

Sur la figure annexée, on a représenté une goulotte 10 de remplissage de réservoir d'agent réducteur et une goulotte 20 de réservoir de carburant. La goulotte 10 se prolonge vers le réservoir d'agent réducteur par une conduite de remplissage 11 tandis que la goulotte 20 se prolonge vers le réservoir de carburant par une conduite de remplissage 21. Ces deux goulottes sont disposées côte à côte et peuvent par exemple être accessibles sous une trappe qui leur est commune. La goulotte 10 du réservoir d'agent réducteur est munie d'un bouchon 12 et la goulotte de remplissage de carburant 20 est munie d'un bouchon 22.

Le bouchon 12 est ici équipé d'un lien d'imperdabilitié 13 qui, de manière connue en soi, est un lien souple reliant la goulotte 10 au bouchon 12. Le lien 13 est ici constitué d'une bande en matière plastique élastomère et de deux anneaux, l'un 14 entourant la goulotte 10 et l'autre 15 entourant le bouchon 12 de telle sorte que lorsque le bouchon 12 est désolidarisé de la goulotte 10 il est retenu à l'encontre d'une chute intempestive par le lien 13 qui le lie à la goulotte 10. Le lien d'imperdabilité 13 forme ainsi une anse ou partie en arc de cercle s'étendant de l'anneau 14 à l'anneau 15 sur le côté du bouchon 12 de telle sorte que le lien 13 s'étend à l'opposé du bouchon de carburant 22 par rapport au bouchon d'agent réducteur 12. Le lien d'imperdabilité 13 se prolonge ici en direction du bouchon 10 sous la forme d'une extension 16 laquelle s'étend sous le bouchon 22. L'extension 16 s'étend depuis le bouchon d'agent réducteur 12 sensiblement radialement relativement au sens longitudinal de goulotte 10. L'extension 16 du lien d'imperdabilité et du bouchon comprend une languette 17 puis une partie en arc de cercle 18 comme moyens de fixation laquelle partie est complémentaire de la circonférence de la goulotte de carburant 20 et laquelle est prise en sandwich entre le bouchon 22 et la goulotte 20 de remplissage de carburant pour retenir l'extension 16 d'une ouverture de réservoir d'agent réducteur 12. Le bouchon 22 vient donc plaquer la partie en arc de cercle 18 contre une collerette de la goulotte 20, empêchant ainsi une extraction de la partie en arc de cercle 18 lorsque le bouchon de carburant 22 est fermé. La partie en arc de cercle 18 forme donc deux branches configurées pour venir de part et d'autre du bouchon de réservoir de carburant 22 et s'ancrer sous celui-ci. La languette 17 et la partie en arc de cercle 18 forment ainsi une extension du bouchon 12 venant indexer la position du bouchon 12 sur la position du bouchon 22.

La partie en arc de cercle 18 peut être remplacée par un anneau entourant la goulotte 20 comme moyens de fixation destinés à coopérer avec le bouchon de réservoir de carburant. Dans le présent mode de réalisation, la languette 17 est réalisée en matériau souple mais en variante, le matériau constitutif de la languette peut présenter une rigidité suffisante pour que, même si la partie en arc de cercle 18 n'est pas prise en sandwich, sa séparation de la goulotte 20 n'est pas possible sans extraction du bouchon de carburant 22. Il est notamment possible de réaliser la languette 17 sous la forme d'une bande métallique, éventuellement noyée dans une matière plastique, préférentiellement dans la matière plastique formant par continuité l'anse du lien d'imperdabilité 13. De même, en variante la partie en arc de cercle 18 peut être absente, la languette 17 seule produisant un verrouillage du bouchon 12 en indexation de la présence du bouchon de carburant 22 sur sa goulotte 20.

Grace à un tel dispositif, le bouchon d'agent réducteur 12 ne peut être retiré que si le bouchon de carburant 22 est lui-même séparé de sa goulotte. Le bouchon de carburant 22 présentant ici un verrou 23, seul le propriétaire du véhicule peut donc libérer le bouchon 12 de la goulotte 10 de remplissage de l'agent réducteur.

Bien que l'on ait décrit ici une extension 16 faisant corps avec le lien d'imperdabilité 13, en variante une telle extension peut être remplacée par toute autre forme s'étendant depuis le bouchon d'agent réducteur 12 et venant s'indexer sur la position du bouchon de carburant 22. Ainsi on peut prévoir une extension venant de matière avec le bouchon d'agent réducteur 12 et venant se placer sous le bouchon de carburant 22.

Une telle extension d'indexation 16 venant se placer sous le bouchon de carburant 22 permet non seulement d'empêcher ou de retarder une intrusion, mais forme plus généralement une languette d'inviolabilité permettant de constater ou au besoin de prouver une intrusion. Un tel dispositif permet d'éviter l'adoption d'une trappe à actionneur et le surcout inhérent à celle-ci. Un tel dispositif limite non seulement le risque de vol de bouchon ou d'agent réducteur mais limite aussi le risque de sabotage. En effet il n'est plus possible à un saboteur de mettre par exemple de l'essence dans le réservoir d'agent réducteur, à tout le moins sans que le client le sache par la constatation que la languette 17 a été endommagée. Un tel dispositif pallie donc à l'absence d'analyseur de liquide dans le réservoir d'agent réducteur, permettant ainsi d'éviter des immobilisations, des emballements moteur et des risques d'incendie notamment si il se produit une injection de carburant dans un filtre à particules en cours de régénération.

## Revendications

1. Dispositif d'obturation de réservoir d'agent réducteur d'oxydes d'azote de véhicule automobile, le dispositif comprenant une goulotte de réservoir d'agent réducteur (10) et un bouchon (12) de réservoir d'agent réducteur, **caractérisé en ce qu'**il comporte une extension (16, 17, 18) s'étendant depuis le bouchon (12) laquelle extension (16, 17, 18) comprend des moyens de fixation destinés à coopérer avec un bouchon de réservoir de carburant (22) pour retenir l'extension (16,17,18) à l'encontre d'une ouverture du bouchon de réservoir d'agent réducteur (12).

2. Dispositif d'obturation selon la revendication 1, **caractérisé en ce qu'**il comporte un lien d'imperdabilité (13, 14, 15) du bouchon de réservoir d'agent réducteur (12), et l'extension (16, 17, 18) est venue de matière avec le lien d'imperdabilité (13, 14, 15).

3. Dispositif selon la revendication 1 ou la revendication 2, **caractérisé en ce que** l'extension (16, 17, 18) s'étend depuis le bouchon (12) de réservoir d'agent réducteur radialement à la goulotte (10) de réservoir d'agent réducteur.

4. Dispositif d'obturation de réservoir d'agent réducteur et d'obturation de réservoir de carburant, le dispositif comprenant un dispositif d'obturation de réservoir d'agent réducteur selon l'une quelconque des revendications 1 à 3 et comprenant en outre une goulotte de réservoir de carburant (20) et un bouchon (22) de réservoir de carburant.

5. Dispositif selon la revendication 4, **caractérisé en ce que** les moyens de fixation de l'extension (16, 17, 18) comportent deux branches configurées pour venir de part et d'autre de la goulotte (20) de réservoir de carburant.

6. Dispositif selon la revendication 4 ou la revendication 5, **caractérisé en ce que** les moyens de fixation de l'extension (16, 17, 18) sont pincés entre le bouchon (22) du réservoir de carburant et la goulotte (20) du réservoir de carburant pour retenir l'extension (16, 17, 18) à l'encontre d'une ouverture du bouchon de réservoir d'agent réducteur (12).

7. Dispositif selon l'une quelconque des revendications 4 à 6, **caractérisé en ce que** l'extension (16, 17, 18) comporte une pièce métallique s'étendant entre les deux bouchons (12, 22).

8. Dispositif selon la revendication précédente, **caractérisé en ce que** la pièce métallique est noyée dans un matériau plastique lequel matériau plastique est venu de matière avec un matériau plastique constitutif du lien d'imperdabilité (16, 17, 18).

9. Dispositif selon l'une quelconque des revendications 4 à 8, **caractérisé en ce que** l'extension (16, 17, 18) est rigide de telle sorte que le bouchon du réservoir d'agent réducteur (12) ne peut pas être ouvert sans ouvrir le bouchon du réservoir de carburant (22) de manière à permettre à l'extension (16, 17, 18) de s'écarter de la goulotte (20) du réservoir de carburant.

10. Dispositif selon l'une quelconque des revendications 4 à 9, **caractérisé en ce que** l'extension (16, 17, 18) forme un anneau disposé de manière à entourer la goulotte (20) du réservoir de carburant.
